# FASCICULE DE BREVET EUROPEEN

(11) **EP 4 028 723 B1**
(45) Date de publication et mention de la délivrance du brevet: **01.04.2026**
(21) Numéro de dépôt: 20771292.8
(22) Date de dépôt: 10.09.2020
(51) Int. Cl.: G01B 11/30, G01N 21/88, G01N 21/952, G01N 21/94, F16L 47/02, F16L 47/26, B29C 65/00, B29C 65/34, B29C 65/02

(54) **DISPOSITIF DE MESURE AVANT SOUDAGE DE COMPOSANTS D'UNE CANALISATION**
VORRICHTUNG ZUM MESSEN VON BAUTEILEN EINES ROHRES VOR DEM SCHWEISSEN
DEVICE FOR MEASURING COMPONENTS OF A PIPE PRIOR TO WELDING

(30) Priorité: 12.09.2019 FR 1910100
(43) Date de publication de la demande: 20.07.2022
(73) Titulaire: GRTgaz, 92277 Bois-Colombes Cedex (FR)
(72) Inventeur: AUSSANT, Pascal, 95800 Cergy-le-Haut (FR); GUEUGNAUT, Dominique, 75005 Paris (FR)
(74) Mandataire: LLR
(86) Numéro de dépôt international: PCT/EP2020/075349
(87) Numéro de publication internationale: WO 2021/048288

(56) Documents cités:
- US-A1- 2001 050 278
- US-A1- 2019 242 728
- US-B1- 7 064 300

## Description

L'invention concerne le domaine des canalisations de distribution de gaz, en matière polymère. Plus précisément, l'invention concerne le soudage de plusieurs jonctions de ces canalisations.

Actuellement, plus de 200 000 jonctions sont réalisées chaque année sur le réseau de distribution de gaz national en France. La majorité de ces jonctions sont réalisées automatiquement au moyen d'automates, selon des technologies connues dans l'état de la technique, comme par exemple le soudage bout à bout ou le soudage par électro-fusion.

On connaît d'après le brevet FR 2 762 540 des automates de soudage capables de fonctionner en mode automatique grâce à l'intégration d'un module électronique permettant de gérer les différentes phases du soudage.

Toutefois, de tels automates et les procédés mis en œuvre ne permettent pas de garantir un soudage de jonctions qui soit à la fois robuste et durable, tout au long de la vie de la canalisation, considérant qu'il est possible que certaines étapes présentent un défaut de qualité de soudage, notamment, au premier niveau, dû au grattage et au nettoyage des composants à souder. Les étapes de grattage et de nettoyage sont nécessaires pour éliminer une barrière chimique qui s'oppose à l'interdiffusion des macromolécules. De tels inconvénients impliquent des coûts importants de recherche des fuites, ainsi que des coûts d'excavation dans un premier temps. Ces coûts sont ensuite suivis par d'autres, tout aussi importants, relatifs aux réparations des fuites lorsque ces dernières ont été identifiées.

De plus, les étapes de mesure des états de surface des composants en vue de définir si ces composants présentent tous les requis nécessaires pour l'étape de soudage sont des opérations complexes à réaliser compte tenu de l'environnement dans lequel elles doivent être réalisées et nécessitent généralement l'utilisation de plusieurs dispositifs indépendants.

US 7 064 300 B1 décrit une méthode de détermination de la qualité de surface d'un tuyau de gaz naturel.

L'invention a notamment pour but de faciliter les étapes de mesure des états de surface des composants à souder, permettant ainsi de réduire drastiquement les coûts afférents à ces étapes. Ainsi, la détection d'un état de surface d'un composant en inadéquation avec une soudure de qualité peut également être mieux détectée ce qui permet, in fine, de réduire les mauvaises soudures et tous les coûts que ces mauvaises soudures impliquent tout au long de la vie de la canalisation.

A cet effet, l'invention a pour objet un dispositif de mesure de l'état de surface d'un composant en matière polymère, ce dispositif comprenant :
- un organe de mesure comprenant au moins un capteur apte à mesurer au moins une donnée relative à l'état de surface du composant et au moins un transmetteur apte à transmettre la donnée du capteur, et
- un support pour l'organe de mesure comprenant des moyens d'assemblage au composant.

Ainsi, le dispositif de l'invention permet de fournir une ou plusieurs données relatives à l'état de surface d'un composant à une unité d'acquisition de données, ce qui permet notamment de réaliser l'étape de réalisation d'une représentation de l'état de surface du composant.

La mesure de ces données relatives à l'état de surface du composant est réalisée au moyen du capteur de l'organe de mesure. Pour ce faire, l'organe de mesure du dispositif de l'invention peut avantageusement comprendre une source d'énergie permettant d'alimenter le capteur et/ou le transmetteur en énergie. De préférence, cette source d'énergie peut être sans fil, comme par exemple une batterie. Une source d'énergie sans fil facilite l'utilisation du dispositif puisque ce dernier n'est pas contraint par les problèmes d'emmêlement de fils ou par la nécessité d'une source d'énergie fixe située à proximité.

L'activation du capteur et la transmission des données mesurées sont gérées par l'élément électronique de l'organe de mesure. Les données mesurées par le capteur sont transférées à l'unité d'acquisition de données qui les traite pour réaliser la représentation de l'état de surface du composant concerné. Ensuite, l'unité d'acquisition de données analyse cette représentation afin d'obtenir un ou plusieurs paramètres relatifs à l'état de surface du composant et compare chaque paramètre avec au moins une valeur de seuil prédéterminée et pré-enregistrée dans l'unité d'acquisition de données.

Afin de mesurer les données sur la surface du composant, l'organe de mesure peut être déplacé en translation et/ou en rotation de manière à balayer cette surface. De préférence, l'organe de mesure peut être déplacé de sorte à balayer la totalité de la surface qui va être soudée, ce qui permet de mesurer des données sur toute cette surface.

Les composants de la canalisation à assembler peuvent correspondre à tout type de jonctions, soudables deux à deux, connues de l'homme du métier, sous condition que l'un des deux composants soit un tube. A titre d'exemple, ces composants peuvent être des tubes, des manchons ou encore des selles de branchement. Ainsi, le ou les seuils de rugosité et de propretés prédéterminées peuvent être spécifiques d'un ou plusieurs types de jonctions.

La matière polymère dans laquelle sont réalisés ces composants de canalisation peut être toute matière connue de l'homme du métier permettant le soudage de ces deux composants en vue de former un réseau de canalisations de gaz, notamment au moyen des technologies de soudage bout à bout ou par électro-fusion. Des matières polymères adaptées sont les matières thermoplastiques. Une matière polymère particulièrement adaptée est le polyéthylène (PE) ou les polyoléfines.

Avantageusement, le capteur est du type à profilométrie laser.

Ainsi, l'étape de réalisation de la représentation de la rugosité du composant est mise œuvre au moyen d'un capteur dont l'utilisation n'est pas destructrice pour le composant à souder, ce qui participe à conserver un état de surface optimal de la portion du composant qui doit être soudée.

Avantageusement, le capteur est du type à fluorescence UV.

Ainsi, l'étape de réalisation de la représentation de la propreté du composant est mise œuvre au moyen d'un capteur dont l'utilisation n'est pas destructrice pour le composant à souder, ce qui participe à conserver un état de surface optimal de la portion du composant qui doit être soudé.

Avantageusement, le capteur est du type spectromètre infrarouges.

A l'instar du capteur du type à fluorescence UV, l'étape de réalisation de la représentation de la propreté du composant est mise œuvre au moyen d'un capteur dont l'utilisation n'est pas destructrice pour le composant à souder.

Avantageusement, le support comprend une virole d'assemblage au composant.

Ainsi, il est possible de positionner au moins partiellement le support dans un composant de canalisation creux afin de permettre la mesure de données relatives à la surface externe de ce composant. Une telle virole peut être déplacée selon un mouvement de translation longitudinale relatif à l'axe longitudinal du composant. Cette virole offre également la possibilité d'un mouvement de rotation de l'organe de mesure autour de l'axe longitudinal du composant. La combinaison de ces deux mouvements permet un balayage plus complet de la surface à souder du composant.

Avantageusement, le support comprend un bâti de serrage autour du composant.

Ainsi, il est possible de positionner l'organe de mesure afin que ce dernier puisse mesurer une surface interne d'un composant à souder. Le bâti de serrage est agencé pour permettre le déplacement de l'organe de mesure selon un mouvement de translation longitudinale et un mouvement de rotation, tous deux relatifs à l'axe longitudinal du composant. La combinaison de ces deux mouvements permet un balayage plus complet de la surface à souder du composant.

Avantageusement, l'organe de mesure comprend un thermomètre infrarouge.

Ainsi, il est possible de fournir un dispositif permettant également de répondre aux problématiques de mesure de la température des composants avant soudage. L'organe de mesure permet donc de mesurer la température du composant. Cette mesure est transmise par le transmetteur à la centrale d'acquisition qui la traite et détermine ainsi la quantité d'énergie requise pour un soudage.

Avantageusement, le dispositif de mesure selon l'invention comprend une source d'énergie sans fil configurée pour alimenter en énergie le capteur et/ou le transmetteur.

L'invention a également pour objet un ensemble de commande comprenant un dispositif selon l'invention et une centrale d'acquisition de données.

L'invention a également pour objet une utilisation d'un ensemble de commande selon l'invention pour la mise en œuvre d'un procédé de vérification de composants en matière polymère avant soudage ou pour la mise en œuvre d'un procédé de soudage de composants en matière polymère.

### Brève description des figures

Nous allons maintenant présenter plusieurs modes de réalisation de l'invention uniquement à titre d'exemples et en se référant aux dessins annexés dans lesquels :
[Fig.1] la figure 1 est un schéma illustrant des éléments d'un dispositif de vérification avant soudage d'un tube en matière polymère et d'un accessoire en matière polymère selon un premier mode de réalisation et un deuxième mode de réalisation,
[Fig.2] la figure 2 est un schéma illustrant des éléments d'un dispositif de vérification avant soudage d'un tube en matière polymère et d'un accessoire en matière polymère selon un troisième mode de réalisation et un quatrième mode de réalisation,
[Fig.3] la figure 3 est un logigramme représentant différentes étapes du procédé de vérification selon un premier mode de mise en œuvre,
[Fig.4] la figure 4 est un logigramme représentant différentes étapes du procédé selon un deuxième mode de mise en œuvre, et
[Fig.5] la figure 5 est un logigramme représentant différentes étapes du procédé de soudage de l'invention selon un premier mode de mise en œuvre,
[Fig.6] la figure 6 est un exemple de représentation de l'état de surface d'un composant.

### Description détaillée

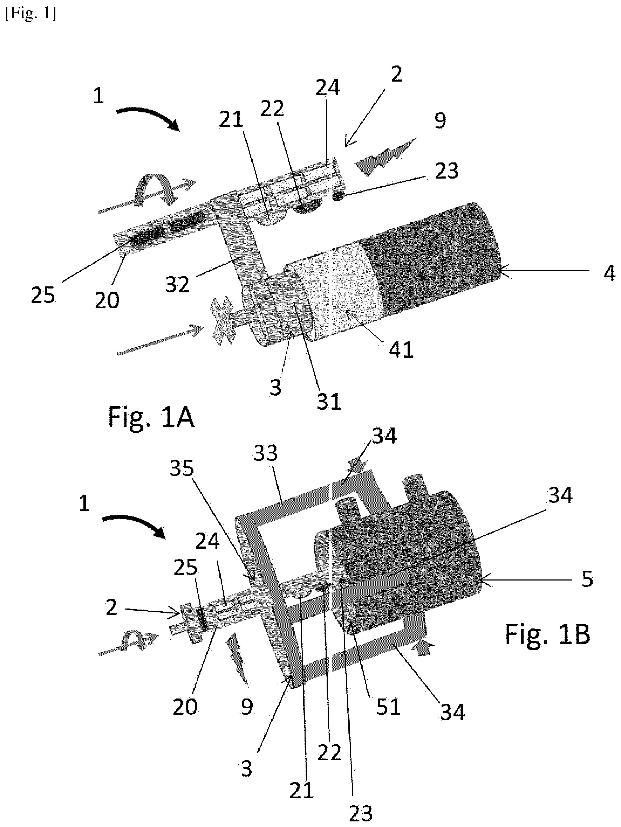

On a représenté sur les figures 1A à 2B, des éléments de dispositifs de mesure 1 de l'état de surface d'un composant 4, 5 ou 6 en matière polymère, selon quatre modes de réalisation différents.

Dans tous ces différents modes de réalisation, le dispositif de mesure 1 comprend un organe de mesure 2 et un support 3 pour l'organe de mesure 2 comprenant des moyens d'assemblage au composant 4, 5 ou 6. Ces composants 4, 5 ou 6 ont une forme profilée cylindrique tubulaire à section circulaire.

L'organe de mesure 2 comprend un corps principal 20, un capteur du type à profilométrie laser 21, un capteur du type à fluorescence UV 22, un thermomètre infrarouge 23, des transmetteurs 24 et au moins une source d'énergie 25 sans fil qui alimente en énergie les quatre types d'éléments précités.

Le corps principal 20 peut se présenter sous la forme d'une barrette, ce qui permet de pouvoir agencer les différents éléments de l'organe de mesure 2 facilement.

Comme illustré à la figure 1A, le dispositif de mesure 1 permet notamment de mesurer des données relatives à l'état de surface (rugosité, propreté et température) d'une portion externe 41 d'un tube creux 4, dont l'extrémité est destinée à être soudée dans la demi-emboîture du manchon 5 de la figure 1B. Le support 3 comprend en ce sens une virole 31 apte à être positionnée dans le tube 4 et un bras 32 qui s'étend depuis la virole 31 et qui permet de déporter l'organe de mesure 2 par rapport à la portion 41 du tube 4. Pour la réalisation des mesures, le corps principal 20 est apte à être mu en translation par rapport au tube 4, suivant une direction parallèle à l'axe longitudinal du tube 4. Le corps principal 20 est également apte à être mu en rotation par rapport au tube 4, autour de cet axe longitudinal. Ainsi, le capteur du type à profilométrie laser 21 et le capteur du type à fluorescence UV 22 peuvent balayer la totalité de la portion 41 du tube 4. Ces deux capteurs permettent de fournir des données relatives à l'état de surface (rugosité et propreté) de la portion 41 du tube 4. Ces données sont transmises à une unité d'acquisition de données 9 au moyen des transmetteurs 24. L'unité d'acquisition de données 9 est apte à traiter et analyser les données qu'elle reçoit.

Afin de vérifier l'état de surface de la portion interne 51 du manchon 5, le support 3 du dispositif 1 selon un deuxième mode de réalisation comprend un bâti de serrage 33. Ce bâti de serrage 33 comprend des pattes 34 qui exercent chacune une force de compression sur la surface externe du manchon 5, permettant ainsi de maintenir le support 3 dans une position immobile par rapport au manchon 5. Le support 3 comprend également une partie centrale 35 dans laquelle est ménagée une ouverture (non représentée). Cette ouverture permet de positionner au moins partiellement l'organe de mesure 2 dans la demi-emboîture du manchon 5. A travers cette ouverture, le corps principal 20 de l'organe de mesure 2 peut être mu selon un mouvement de translation par rapport au manchon 5, suivant une direction parallèle à l'axe longitudinal du manchon 5. Ainsi, l'organe de mesure 2 peut être introduit plus en profondeur au sein du manchon 5. Le corps principal 20 peut également être mu selon un mouvement de rotation par rapport au manchon 5, autour de cet axe longitudinal. Cette combinaison de mouvements longitudinaux et de rotation permet au capteur du type à profilométrie laser 21 et au capteur du type à fluorescence UV 22 de balayer la totalité de la portion interne 51 du manchon 5. En mesurant l'état de surface interne du manchon 5, il est notamment possible de déterminer des anomalies présentes sur la nappe chauffante (ex : fils déplacés, cavités, *etc*.).

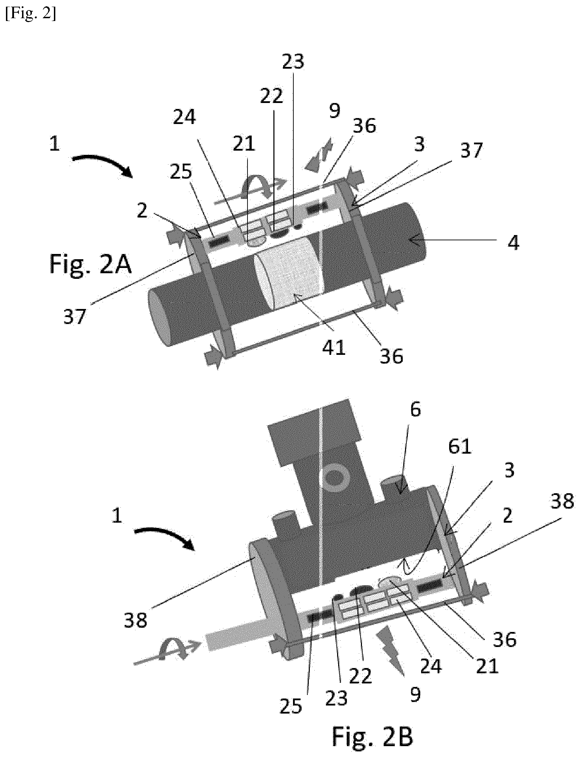

Un troisième mode de réalisation est illustré à la figure 2A et permet de vérifier l'état de surface d'une portion 41 d'un tube 4, destinée à être soudée avec une portion (non visible) d'une selle de branchement 6.

Pour ce faire, le support 3 comprend deux cerclages 37 formant des logements circulaires et aptes à encercler le tube 4. Ces deux cerclages 37 sont reliés l'un à l'autre au moyen de deux tiges de serrage 36 qui permettent de maintenir l'ensemble du support 3 et de le solidariser au tube 4. Les deux logements circulaires 37 présentent chacun une ouverture (non représentée) permettant de disposer l'organe de mesure 2 dans une position déportée par rapport à la portion 41 du tube 4 et en regard de cette portion. A l'instar des deux premiers modes de réalisation présentés, le corps principal 20 de l'organe de mesure 2 peut être mu en translation et en rotation de manière à ce que le capteur du type à profilométrie laser 21 et le capteur du type à fluorescence UV 22 puissent balayer l'ensemble de la portion 41 du tube 4.

La selle de branchement 6 destinée à être soudée avec le tube 4 illustré à la figure 2B est un composant creux, en forme de demi-cylindre. Afin de vérifier l'état de surface de la portion interne 61 de la selle de branchement 6, le support 3 du dispositif de vérification 1 selon le quatrième mode de réalisation comprend deux éléments de contact 38. Ces éléments de contact 38 sont aptes à être positionnés chacun sur une des extrémités de la selle de branchement 6. Ils sont reliés l'un à l'autre au moyen d'une tige de serrage 36 qui permet de solidariser l'ensemble du support 3 et de le maintenir dans une position immobile par rapport à la selle de branchement 6. Les deux éléments de contact 38 présentent chacun une ouverture (non représentée) permettant de disposer l'organe de mesure 2 dans une position déportée par rapport à la surface intérieure de la selle de branchement 6. Comme pour les modes de réalisation précédents, le corps principal 20 de l'organe de mesure 2 peut être mu en translation et en rotation de manière à ce que le capteur du type à profilométrie laser 21 et le capteur du type à fluorescence UV 22 puissent balayer l'ensemble de la portion à souder de la selle de branchement 6. En mesurant l'état de surface interne de la selle de branchement 6, il est notamment possible de déterminer des anomalies présentes sur la nappe chauffante (ex : fils déplacés, cavités, *etc*.).

Le dispositif 1 peut, en outre, être associé à des moyens automatisés en vue de mettre en œuvre un procédé de vérification des composants 4, 5, 6 avant soudage. Ces moyens automatisés intègrent l'unité d'acquisition de données 9, qui forme avec le dispositif de mesure l'ensemble de commande de l'invention, à laquelle sont transmises les données mesurées par les différents capteurs 21, 22, 23 du dispositif 1. Le dispositif de mesure 1 peut être un automate permettant une mise en œuvre automatisée du procédé de vérification.

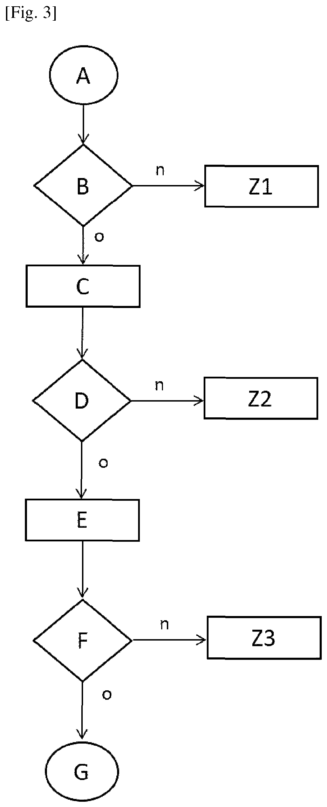

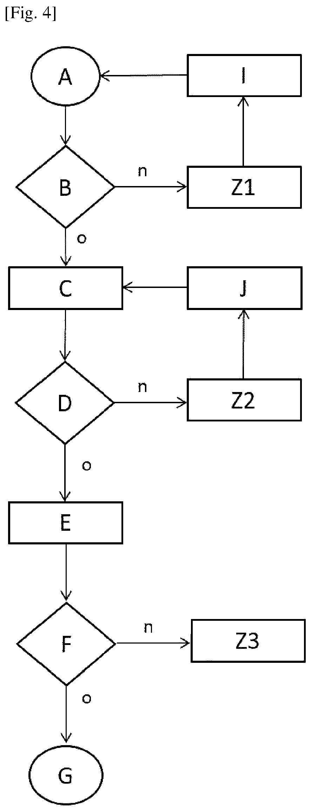

On a représenté sur les figures 3 et 4 deux modes de mise en œuvre d'un procédé de vérification avant soudage d'un tube 4 en matière polymère et d'un accessoire 5 ou 6 en matière polymère.

Le procédé de vérification selon le premier mode de mise en œuvre (figure 3), débute par une première étape A de détermination de valeurs respectives relatives à la rugosité du tube 4 et de l'accessoire 5 ou 6 à souder, ici dans le but de former une canalisation de gaz. Un tel procédé est également adapté à la vérification avant soudage d'une canalisation destinée à recevoir des types de contenants autres que du gaz et dont le transport est compatible avec la matière polymère du tube 4 et de l'accessoire 5 ou 6. Un tel contenant peut par exemple être un fluide, tel que l'eau.

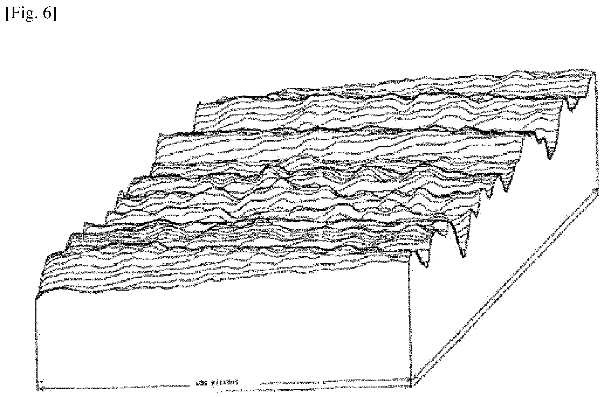

Dans le mode de mise en œuvre illustré à la figure 3, l'étape A comprend la réalisation d'une représentation de la rugosité du tube 4 et de l'accessoire 5 ou 6. Cette étape de réalisation est mise en œuvre au moyen d'un ou plusieurs capteurs du type à profilométrie laser 21 du dispositif 1 réalisant des mesures de données relatives à la rugosité du tube 4 et de l'accessoire 5 ou 6 à souder. Ensuite, les données mesurées sont traitées informatiquement via une unité d'acquisition de données 9 intégrée dans les moyens automatisés, ce qui permet de réaliser ladite représentation dont un exemple de représentation graphique en trois dimensions est illustré à la figure 6.

Après la réalisation de la représentation de la rugosité du tube 4 et de l'accessoire 5 ou 6, cette dernière est analysée afin de déterminer les valeurs respectives relatives à la rugosité du tube 4 et de l'accessoire 5 ou 6. De telles valeurs peuvent être issues de la liste suivante non exhaustive : la rugosité totale (Rt), l'écart moyen (Ra), la rugosité moyenne, le pic maximal (Rp), le creux maximal (Rc), la période du sillon principal, la surface développée de la portion du composant à souder, l'anisotropie de structure, la striation dans le sens du grattage.

Cette première étape A est suivie d'une étape B de comparaison lors de laquelle les valeurs respectives relatives à la rugosité du tube 4 et de l'accessoire 5 ou 6 sont comparées respectivement à un seuil de rugosité du tube 4 et un seuil de rugosité de l'accessoire. Cela permet de déterminer si une condition prédéterminée entre la valeur relative à la rugosité du tube 4 et un seuil de rugosité du tube 4 et si une condition prédéterminée entre la valeur relative à la rugosité de l'accessoire 5 ou 6 et un seuil de rugosité de l'accessoire 5 ou 6 sont remplies. Si tel est le cas, le passage à l'étape C est autorisé. Cependant, si au moins l'une des deux conditions de l'étape B n'est pas remplie, alors des moyens automatisés empêchent de passer à l'étape C (étape Z1). Il n'est pas possible pour un opérateur de contourner manuellement le blocage du procédé par les moyens automatisés. Ces derniers peuvent comprendre une tablette, un ordinateur ou un smartphone qui intègre un logiciel programmé pour empêcher le passage à l'étape C si l'une des conditions prédéterminées et nécessaires pour valider ce passage n'est pas remplie. Les moyens automatisés peuvent par exemple être programmés pour autoriser le déblocage des moyens permettant la réalisation de l'étape C uniquement si les conditions prédéterminées de l'étape B sont toutes les deux remplies.

L'étape C est une étape de détermination de valeurs respectives relatives à la propreté du tube 4 et de l'accessoire 5 ou 6.

Selon ce premier mode de mise en œuvre, l'étape C comprend une étape de réalisation d'une représentation de la propreté du tube 4 et de l'accessoire. Une telle étape peut être mise en œuvre au moyen d'un ou plusieurs capteurs du type à fluorescence UV 22 du dispositif 1 réalisant des mesures de données relatives à la propreté de la surface du tube 4 et de l'accessoire 5 ou 6 à souder. En remplacement ou en complément des capteurs du type à fluorescence UV 22, le dispositif 1 peut également comprendre un ou plusieurs spectromètres infrarouges permettant également de mesurer des données relatives à la propreté de la surface du tube 4 et de l'accessoire 5 ou 6 à souder. Ensuite les données mesurées sont traitées informatiquement via l'unité d'acquisition de données 9, ce qui permet de réaliser ladite représentation.

Après la réalisation de la représentation de la propreté du tube 4 et de l'accessoire 5 ou 6, cette dernière est analysée afin de déterminer les valeurs respectives relatives à la propreté du tube 4 et de l'accessoire 5 ou 6. De telles valeurs peuvent être relatives au niveau de pollution de l'état de surface, tel que la quantité de graisse ou la quantité de poussière.

L'étape C est suivie d'une étape D de comparaison lors de laquelle les valeurs respectives relatives à la propreté du tube 4 et de l'accessoire 5 ou 6 sont comparées respectivement à un seuil de propreté du tube 4 et un seuil de propreté de l'accessoire 5 ou 6. Cela permet de contrôler si une condition prédéterminée entre la valeur relative à la propreté du tube 4 et un seuil de propreté du tube 4 et si une condition prédéterminée entre la valeur relative à la propreté de l'accessoire 5 ou 6 et un seuil de propreté de l'accessoire 5 ou 6 sont remplies. Si tel est le cas, le passage à l'étape E de mesure de valeurs relatives à la température du tube 4 et de l'accessoire 5 ou 6 est autorisé par les moyens automatisés. Une telle mesure de la température est réalisée au moyen du thermomètre infrarouge 23 de l'organe de mesure 2 du dispositif 1.

Cependant, si au moins l'une des deux conditions de l'étape D n'est pas remplie, alors les moyens automatisés empêchent de passer à l'étape E (étape Z2). Là encore, il n'est pas possible pour un opérateur de contourner manuellement le blocage du procédé par les moyens automatisés. Le blocage du procédé à ce niveau du procédé peut prendre différentes formes. Par exemple, les moyens automatisés peuvent interdire le déblocage des moyens du dispositif 1 permettant de réaliser la mesure de température du tube 4 et de l'accessoire 5 ou 6. Ainsi, il est impossible de contourner ce blocage par les moyens automatisés.

L'étape E est suivie d'une étape F de comparaison lors de laquelle les valeurs respectives relatives à la température du tube 4 et de l'accessoire 5 ou 6 sont comparées à une plage de températures. Si les valeurs mesurées relatives à la température du tube 4 et de l'accessoire 5 ou 6 se situent en dehors de la plage de températures, les moyens automatisés empêchent de passer à l'étape F de montage de l'accessoire 5 ou 6 sur le tube 4 (étape Z3). A l'inverse, si ces valeurs relatives à la température se situent dans la plage de températures, le passage à l'étape G de montage de l'accessoire 5 ou 6 sur le tube 4 est autorisé par les moyens automatisés et l'opérateur procède au montage de l'accessoire 5 ou 6 sur le tue 4 grâce à des moyens de montage (non représentés) du dispositif de vérification 1.

Lorsque toutes les conditions prédéterminées des étapes B, D et F sont remplies et que l'étape G de montage a été réalisée via des moyens de montage (non représentés) ou manuellement, le procédé de vérification selon ce premier mode de mise en œuvre est terminé et le tube 4 et l'accessoire 5 ou 6 peuvent donc être soudés l'un avec l'autre.

Le procédé selon le second mode de mise en œuvre partage les étapes du procédé selon le premier mode de mise en œuvre. Il comprend en outre une étape I de grattage d'une portion non préalable grattée du tube 4 et/ou de remplacement de l'accessoire 5 ou 6 qui sont mises en œuvre après que les moyens automatisés aient empêchés le passage à l'étape C (étape Z1). L'alternative de l'étape I selon laquelle le tube 4 est gratté sur une portion non préalablement grattée est mise en œuvre dans le cas où la condition prédéterminée entre la valeur relative à la rugosité du tube 4 et un seuil de rugosité du tube 4 n'est pas remplie. Ensuite l'étape A est répétée afin de déterminer si la rugosité de la portion du tube 4 nouvellement grattée présente les requis nécessaires en termes de grattage pour permettre une soudure de qualité durable dans le temps. Si tel n'est toujours pas le cas, les moyens automatisés empêchent à nouveau le passage à l'étape C (étape Z1) et la boucle de vérification est répétée. Ainsi, il est possible de garantir de manière efficace que le tube 4 présente une rugosité adéquate pour une soudure de qualité, et ce, sans devoir remplacer le tube 4, ce qui représente une manipulation complexe et onéreuse.

L'alternative de l'étape I selon laquelle l'accessoire 5 ou 6 est remplacé est mise en œuvre dans le cas où la condition prédéterminée entre la valeur relative à la rugosité de l'accessoire 5 ou 6 et un seuil de rugosité de l'accessoire 5 ou 6 n'est pas remplie. Dans ce cas, l'accessoire 5 ou 6 est remplacé et les étapes A et B sont répétées. Comme précédemment, si cette condition n'est toujours pas remplie lors de la nouvelle étape B, les moyens automatisés empêchent à nouveau le passage à l'étape C (étape Z1) et la boucle de vérification est répétée.

Le procédé selon le second mode de mise en œuvre comprend également une deuxième boucle de vérification comprenant les étapes C, D Z2 et J. En effet, lorsque les moyens automatisés bloquent le passage à l'étape E, une étape J est mise en œuvre. L'étape J comprend un nettoyage de la surface du tube 4 et/ou de la surface de l'accessoire 5 ou 6 en fonction de la condition prédéterminée de l'étape D qui n'est pas remplie. A l'instar de la première boucle de vérification, l'étape C est mise en œuvre à nouveau dès la fin de l'étape J, puis l'étape D de comparaison est mise en œuvre à son tour. Dans le cas où l'une au moins des conditions prédéterminées n'est toujours pas remplie, les moyens automatisés bloquent le passage à l'étape E de mesure des valeurs relatives à la température du tube 4 et de l'accessoire 5, 6 et la seconde boucle de vérification est de nouveau mise en œuvre.

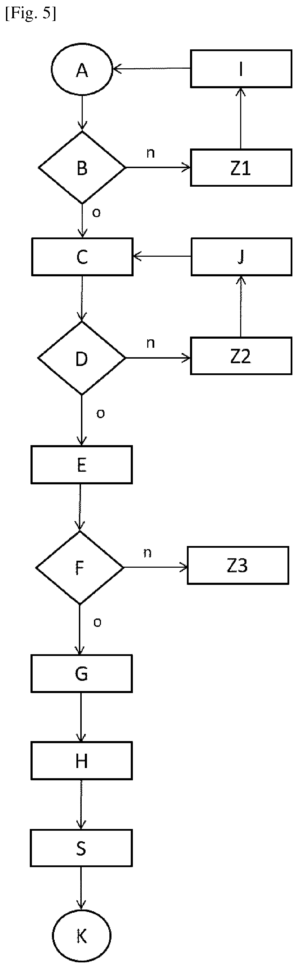

On a représenté à la figure 5, un mode de mise en œuvre d'un procédé de soudage d'un tube 4 en matière polymère et d'un accessoire 5 ou 6 en matière polymère pour former une canalisation de gaz, dans lequel on met en œuvre le procédé de vérification selon le deuxième mode de mise en œuvre décrit précédemment.

Ce procédé de soudage reprend toutes les étapes décrites dans le cadre de la description du procédé de vérification selon le deuxième mode de mise en œuvre.

Dans une variante non représentée du procédé de soudage de l'invention, une troisième boucle de vérification est réalisée entre les étapes E, F et Z3. Plus précisément, une seconde étape de mesure E est mise en œuvre après l'étape Z3 afin de déterminer une nouvelle mesure relative à la température du tube 4 et de l'accessoire 5 ou 6. Cette seconde étape de mesure est réalisée au moyen du thermomètre infrarouge 23 de l'organe de mesure 2 du dispositif 1 et est mise en œuvre après un certain temps, afin de permettre à la température du tube 4 et de l'accessoire 5 ou 6 d'évoluer vers la température ambiante. Ensuite l'étape F est mise en œuvre à nouveau et si l'une des secondes valeurs mesurées relatives à la température du tube 4 et de l'accessoire 5 ou 6 se situe encore en dehors de la plage de températures, les moyens automatisés empêchent à nouveau le passage à l'étape G. De plus, s'il s'avère que l'une des valeurs mesurées relatives à la température mesurée du tube 4 et de l'accessoire 5 ou 6 est trop éloignée de l'une des bornes de la plage de températures, de telle sorte que le tube 4 ou l'accessoire 5 ou 6 ne peut pas atteindre une température acceptable en vue d'une étape de soudage, alors le procédé peut être arrêté par les moyens automatisés.

Lorsque le résultat de l'étape F de comparaison des valeurs mesurées relatives à la température mesurée à l'étape E est positif, c'est-à-dire que ces valeurs mesurées sont comprises dans la plage de températures, les moyens automatisés autorisent le passage à l'étape G du procédé.

A l'étape H, on détermine la quantité d'énergie à fournir à l'automate de soudage pour le soudage entre le tube 4 et l'accessoire 5 ou 6, et ce, en fonction des valeurs de température mesurées à l'étape E. En fonction de ces valeurs de température mesurées, le temps et la puissance de chauffage sont adaptés par l'automate pour assurer un assemblage durable dans le temps. Cet assemblage est réalisé lors de la mise en œuvre de l'étape de soudage S.

Après la réalisation de l'étape de soudage (étape S), une étape d'élaboration d'un procès-verbal (étape K) est réalisée afin de délivrer un procès-verbal de soudage et de traçabilité des composants soudés ayant pour finalité de répertorier les deux composants soudés et les conditions de soudage.

Le procédé de soudage de l'invention peut également comprendre des étapes de grattage du tube 4 préalables à l'étape A. Ces étapes de grattage préalables ont pour but de préparer la surface du tube 4 en vue de l'étape de soudure au regard des requis de grattage du tube 4. Ce procédé peut également comprendre des étapes de nettoyage du tube 4 et de l'accessoire 5 ou 6 préalables à l'étape C. Ces étapes de nettoyage préalables ont pour but de préparer la surface de ces composants en vue de l'étape de soudure au regard des requis de propreté de chacun de ces composants.

Les moyens automatisés du dispositif de mesure sont agencés pour assister l'opérateur lors de la mise en œuvre de l'un, au moins, des procédés tels que nous venons de les présenter. Ils sont notamment programmés pour permettre le passage à telle ou telle étape suivante comme indiqué, ou au contraire l'empêcher si la condition prévue à cette fin n'est pas remplie. On peut prévoir que ces moyens commandent tout ou partie des étapes des procédés. A cette fin, le dispositif comprend sur un support d'enregistrement un programme d'ordinateur comprenant des instructions de code aptes à commander ces étapes lorsqu'il est exécuté sur le dispositif.

Les étapes G et H du mode de mise en œuvre du procédé de soudage de la figure 5 peuvent être mises en œuvre selon un ordre inverse de celui décrit précédemment. Ces deux étapes peuvent également être mises en œuvre de manière concomitante.

### Liste des références

1 : dispositif de mesure
2 : organe de mesure
3 : support pour l'organe de mesure
4 : tube en matière polymère
5 : manchon en matière polymère
6 : selle de branchement en matière polymère
9 : unité d'acquisition de données
20 : corps principal
21 : capteur du type à profilométrie laser
22 : capteur du type à fluorescence UV
23 : thermomètre infrarouge
24 : transmetteur
25 : source d'énergie
31 : virole
32 : bras
33 : bâti de serrage
34 : pattes de serrage
35 : partie centrale
36 : tige de serrage
37 : cerclage
38 : élément de contact
41 : portion de la surface à souder du tube
51 : portion de la surface à souder du manchon
61 : portion de la surface à souder de la selle
étape A : détermination de valeurs respectives relatives à la rugosité du tube et de l'accessoire
étape B : comparaisons liées à la rugosité du tube et de l'accessoire
étape C : détermination de valeurs respectives relatives à la propreté du tube et de l'accessoire
étape D : comparaisons liées à la propreté du tube et de l'accessoire
étape E : mesure de valeurs respectives relatives à la température du tube et de l'accessoire
étape F : comparaisons liées aux valeurs de température du tube et de l'accessoire
étape G : montage de l'accessoire sur le tube
étape H : détermination d'une quantité d'énergie requise pour le soudage
étape I : grattage d'une portion non préalable grattée du tube et/ou remplacement de l'accessoire
étape j : nettoyage de la surface du tube et/ou de la surface de l'accessoire
étape K : émission d'un PV de soudage et de traçabilité
étape S : soudage
étape Z1, Z2, Z3 : blocage du procédé par les moyens automatisés

## Revendications

1. Dispositif de mesure (1) de l'état de surface d'un composant (4, 5, 6) en matière polymère comprenant :
- un organe de mesure (2) comprenant au moins un capteur (21, 22, 23) apte à mesurer au moins une donnée relative à l'état de surface du composant (4, 5, 6) et au moins un transmetteur (24) apte à transmettre la donnée du capteur (21, 22, 23), et
- un support (3) pour l'organe de mesure (2) comprenant des moyens d'assemblage au composant (4, 5, 6), **caractérisé en ce que** le support comprend une virole (31) d'assemblage au composant (4, 5, 6), l'organe de mesure étant apte à être mu en rotation autour de l'axe longitudinal du composant de manière à ce que le capteur puisse balayer la surface du composant sur 360°.

2. Dispositif de mesure (1) de l'état de surface d'un composant (4, 5, 6) en matière polymère comprenant :
- un organe de mesure (2) comprenant au moins un capteur (21, 22, 23) apte à mesurer au moins une donnée relative à l'état de surface du composant (4, 5, 6) et au moins un transmetteur (24) apte à transmettre la donnée du capteur (21, 22, 23), et
- un support (3) pour l'organe de mesure (2) comprenant des moyens d'assemblage au composant (4, 5, 6), **caractérisé en ce que** le support comprend un bâti de serrage (33) autour dudit composant (4, 5, 6), l'organe de mesure étant apte à être mu en un mouvement de translation et un mouvement en rotation, tous deux relatifs à l'axe longitudinal du composant de manière à ce que le capteur puisse balayer la surface du composant sur 360°.

3. Dispositif (1) selon la revendication 1 ou 2, dans lequel le capteur (21, 22, 23) est choisi parmi la liste constituée de : capteur du type à profilométrie laser (21), capteur du type à fluorescence UV (22) et capteur du type spectromètre infrarouge.

4. Dispositif (1) selon la revendication 1 ou 2, dans lequel un premier capteur est du type à profilométrie laser (21) et un deuxième capteur est du type à fluorescence UV (22).

5. Dispositif (1) selon la revendication 1 ou 2, dans lequel un premier capteur est du type à profilométrie laser (21) et un deuxième capteur est du type spectromètre infrarouge.

6. Dispositif (1) selon l'une quelconque des revendications précédentes, dans lequel l'organe de mesure (2) comprend un thermomètre infrarouge (23).

7. Dispositif (1) selon l'une quelconque des revendications précédentes, comprenant une source d'énergie (25) sans fil configurée pour alimenter en énergie le capteur (21, 22) et/ou le transmetteur (24).

8. Ensemble de commande comprenant un dispositif de mesure (1) selon l'une quelconque des revendications 1 à 7 et une centrale d'acquisition de données (9).

9. Utilisation d'un ensemble de commande selon la revendication 8 pour la mise en oeuvre d'un procédé de vérification de composants (4, 5, 6) en matière polymère avant soudage ou pour la mise en œuvre d'un procédé de soudage de composants (4, 5, 6) en matière polymère.

## Patentansprüche

1. Vorrichtung zum Messen (1) des Oberflächenzustands eines Bauteils (4, 5, 6) aus Polymermaterial, umfassend
- ein Messglied (2), umfassend mindestens einen Sensor (21, 22, 23), der zum Messen mindestens eines Datenelements bezüglich des Oberflächenzustands des Bauteils (4, 5, 6) imstande ist, und mindestens einen Messwertgeber (24), der zum Übertragen des Datenelements von dem Sensor (21, 22, 23) imstande ist, und
- eine Halterung (3) für das Messglied (2), die Mittel zum Verbinden mit dem Bauteil (4, 5, 6) umfasst,
**dadurch gekennzeichnet, dass** die Halterung eine Hülse (31) zum Verbinden mit dem Bauteil (4, 5, 6) umfasst, wobei das Messglied um die Längsachse des Bauteil in Rotation beweglich ist, so dass der Sensor einen 360°-Scan der Oberfläche des Bauteils vollführen kann.

2. Vorrichtung zum Messen (1) des Oberflächenzustands eines Bauteils (4, 5, 6) aus Polymermaterial, umfassend
- ein Messglied (2), umfassend mindestens einen Sensor (21, 22, 23), der zum Messen mindestens eines Datenelements bezüglich des Oberflächenzustands des Bauteils (4, 5, 6) imstande ist, und mindestens einen Messwertgeber (24), der zum Übertragen des Datenelements von dem Sensor (21, 22, 23) imstande ist, und
- eine Halterung (3) für das Messglied (2), die Mittel zum Verbinden mit dem Bauteil (4, 5, 6) umfasst,
**dadurch gekennzeichnet, dass** die Halterung einen Rahmen (33) zum Umspannen des Bauteils (4, 5, 6) umfasst, wobei das Messglied in Translation und in Rotation beweglich ist, beide in Bezug auf die Längsachse des Bauteils, so dass der Sensor einen 360°-Scan der Oberfläche des Bauteils vollführen kann.

3. Vorrichtung (1) nach Anspruch 1 oder 2, wobei der Sensor (21, 22, 23) ausgewählt ist aus der Liste, bestehend aus: Sensor des Laser-Profilometrie-Typs (21), Sensor des UV-Fluoreszenz-Typs (22) und Sensor des Infrarotspektrometer-Typs.

4. Vorrichtung (1) nach Anspruch 1 oder 2, wobei ein erster Sensor des Laser-Profilometrie-Typs (21) ist und ein zweiter Sensor des UV-Fluoreszenz-Typs (22) ist.

5. Vorrichtung (1) nach Anspruch 1 oder 2, wobei ein erster Sensor des Laser-Profilometrie-Typs (21) ist und ein zweiter Sensor des Infrarotspektrometer-Typs ist.

6. Vorrichtung (1) nach einem der vorhergehenden Ansprüche, wobei das Messglied (2) ein Infrarot-Thermometer (23) umfasst.

7. Vorrichtung (1) nach einem der vorhergehenden Ansprüche, umfassend eine drahtlose Energiequelle (25), die für die Energieversorgung des Sensors (21, 22) und/oder des Messwertgebers (24) eingerichtet ist.

8. Steueranordnung, umfassend eine Messvorrichtung (1) nach einem der vorhergehenden Ansprüche 1 bis 7 und eine Datenerfassungszentrale (9).

9. Verwendung einer Steueranordnung nach Anspruch 8 zum Durchführen eines Verfahrens zum Überprüfen von Bauteilen (4, 5, 6) aus Polymermaterial vor dem Schweißen oder zum Durchführen eines Verfahrens zum Schweißen von Bauteilen (4, 5, 6) aus Polymermaterial.

## Claims

1. A device (1) for measuring the surface condition of a polymer component (4, 5, 6), comprising:
- a measuring member (2) comprising at least one sensor (21, 22, 23) suitable for measuring at least one item of data relating to the surface condition of the component (4, 5, 6) and at least one transmitter (24) suitable for transmitting the data from the sensor (21, 22, 23), and
- a support (3) for the measuring member (2) comprising means for mounting on the component (4, 5, 6),
**characterized in that** the support comprises a ferrule (31) for mounting on the component (4, 5, 6), the measuring member being suitable for being driven in rotation about the longitudinal axis of the component such that the sensor is able to scan the surface of the component over 360°.

2. A device (1) for measuring the surface condition of a polymer component (4, 5, 6), comprising:
- a measuring member (2) comprising at least one sensor (21, 22, 23) suitable for measuring at least one item of data relating to the surface condition of the component (4, 5, 6) and at least one transmitter (24) suitable for transmitting the data from the sensor (21, 22, 23), and
- a support (3) for the measuring member (2) comprising means for mounting on the component (4, 5, 6),
**characterized in that** the support comprises a clamping frame (33) around said component (4, 5, 6), the measuring member being suitable for being driven in a translational movement and a rotational movement, both relative to the longitudinal axis of the component, such that the sensor is able to scan the surface of the component over 360°.

3. The device (1) according to claim 1 or 2, wherein the sensor (21, 22, 23) is selected from the list consisting of: a laser profilometry-type sensor (21), a UV fluorescence-type sensor (22), and an infrared spectrometer-type sensor.

4. The device (1) according to claim 1 or 2, wherein a first sensor is of the laser profilometry type (21) and a second sensor is of the UV fluorescence type (22).

5. The device (1) according to claim 1 or 2, wherein a first sensor is of the laser profilometry type (21) and a second sensor is of the infrared spectrometer type.

6. The device (1) according to any one of the preceding claims, wherein the measuring member (2) comprises an infrared thermometer (23).

7. The device (1) according to any one of the preceding claims, comprising a wireless power source (25) configured to supply power to the sensor (21, 22) and/or to the transmitter (24).

8. A control assembly comprising a measuring device (1) according to any one of claims 1 to 7 and a data acquisition unit (9).

9. Use of a control assembly according to claim 8 for carrying out a process for verifying polymer components (4, 5, 6) prior to welding or for carrying out a process for welding polymer components (4, 5, 6).
